# FASCICULE DE BREVET EUROPEEN

(11) **EP 0 461 941 B1**
(45) Date de publication et mention de la délivrance du brevet: **20.10.1993**
(21) Numéro de dépôt: 91401094.7
(22) Date de dépôt: 25.04.1991
(51) Int. Cl.: F16B 43/00

(54) **Elément plurifonctionnel pour l'assemblage de deux pièces bloquées par vissage**
Multifunktionelles Element für die Montage von zwei durch Verschraubung blockierten Teilen
Multifunctional element for assembling two pieces locked by threaded connection

(30) Priorité: 13.06.1990 FR 9007364
(43) Date de publication de la demande: 18.12.1991
(73) Titulaire: AUTOMOBILES PEUGEOT, 75116 Paris (FR); AUTOMOBILES CITROEN, 92200 Neuilly-sur-Seine (FR)
(72) Inventeur: Bredeka, Alain, F-78800 Houilles (FR)
(74) Mandataire: Seytre, Françoise

(56) Documents cités:
- WO-A-91/11607
- DE-A- 1 650 988
- GB-A- 2 184 187
- US-A- 4 702 657

## Description

L'invention concerne un élément d'un assemblage bloqué par vissage, formant rondelle de contact et assurant à la fois des fonctions de centrage, d'étanchéité et d'insonorisation.

On connaît de telles rondelles qui, interposées entre la tête d'une vis et la surface d'une des pièces à assembler assurent au moins l'une des fonctions précitées. En règle générale, il est nécessaire, pour obtenir les trois à la fois, d'empiler plusieurs rondelles de forme et de matériau différents. De sorte que cela complique le montage des pièces avec lesquelles elles sont utilisées, et par conséquent en augmente la durée. Ceci est particulièrement préjudiciable dans les montages réalisés de façon automatique.

On connaît également, par exemple par le brevet US 4 702 657, un joint autocentreur formé d'une rondelle en matériau élastomère pourvue d'une gorge périphérique dans laquelle est engagé un jonc de retenue métallique. Toutefois, ledit jonc métallique étant au contact, à la fois, de la tête de la vis d'assemblage et de la surface de l'une des pièces à assembler, il transmet les vibrations de l'une des pièces à l'autre, de sorte que l'assemblage n'a aucune fonction d'insonorisation.

Le but de l'invention est donc de proposer un assemblage, composé de deux pièces bloquées par vissage et d'un élément unique, formant rondelle de contact, permettant d'obtenir à la fois le centrage des pièces à assembler, leur isolation phonique réciproque ainsi que l'étanchéité de la fixation.

Pour ce faire, ledit élément est interposé entre la face inférieure de l'organe de manoeuvre et/ou de serrage d'une vis et la surface en regard de l'une des deux pièces à assembler, il comporte un manchon en matériau plastique, serré sur la surface externe du noyau de la vis et pourvu d'une gorge circulaire creusée radialement de façon à déboucher sur la surface externe périphérique dudit manchon dans laquelle est engagée et serrée une rondelle métallique, en saillie au-delà de la surface externe du manchon.

Selon l'invention, l'une des deux pièces à assembler est munie d'une cavité dont le fond est pourvu d'un perçage de diamètre sensiblement supérieur au noyau de la vis qui le traverse et qui est apte à recevoir l'organe de manoeuvre et/ou de serrage de ladite vis ainsi que l'élément formant rondelle de contact, de façon que la paroi latérale de la cavité soit au contact, à un faible jeu près, de la périphérie extérieure de la rondelle métallique de l'élément, lequel comporte une seconde rondelle métallique interposée entre la face inférieure de l'organe de manoeuvre et/ou d'assemblage et la surface supérieure du manchon de laquelle elle est rendue solidaire, la périphérie de son trou central étant au contact, à un faible jeu près, de la surface externe du noyau de la vis précitée.
- Selon une caractéristique de l'invention, la seconde rondelle est rendue solidaire de la surface supérieure du manchon par adhérisation.
- Selon une variante avantageuse de réalisation les deux rondelles métalliques sont rendues solidaires du manchon par surmoulage.
- On précisera que l'élément de manoeuvre et/ou de serrage est la tête de la vis d'assemblage.
- En variante, ledit élément de manoeuvre et/ou de serrage est un écrou coopérant avec la vis d'assemblage.

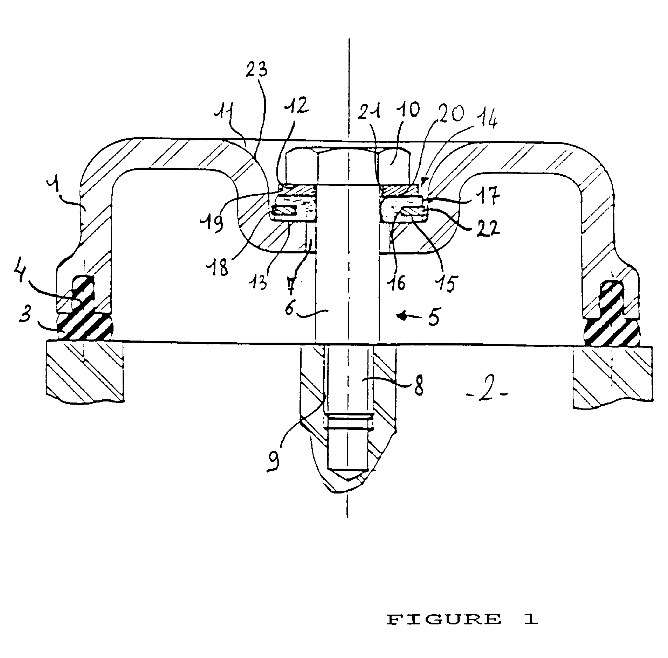

Les caractéristiques et avantages de l'invention apparaîtront à la lecture de la description détaillée qui va suivre, pour la compréhension de laquelle on se reportera à la figure unique annexée laquelle est une vue en coupe axiale d'un assemblage utilisant un élément selon l'invention.

On a représenté un élément utilisé pour la fixation d'un couvre-culasse 1 sur une culasse 2 d'un moteur à combustion interne de véhicule automobile. Un joint 3 chaussé dans une gorge pratiquée dans le couvre-culasse 1 assure l'étanchéité périphérique (notamment à l'huile de graissage du mécanisme de distribution contenue dans la culasse 2) ainsi qu'une isolation phonique de l'assemblage dont la fixation s'effectue au moyen de vis 5. Le noyau 6 de ladite vis traverse un perçage 7 du couvre-culasse et son extrémité filetée 8 coopère avec un taraudage 9 de la culasse 2 pour assurer le blocage de l'ensemble. La tête 10 de la vis 5 est logée, en appui, dans une cavité 11 pratiquée dans le couvre-culasse dans laquelle cette vis est introduite au montage. On conçoit que dans un agencement de cette sorte les vibrations émises par les organes en mouvement du moteur soient transmises par la vis 5 au couvre-culasse, par l'intermédiaire de la culasse 2. Pour éviter cette transmission, source de bruits, il est nécessaire de réaliser une isolation phonique de ladite vis par rapport au couvre-culasse 1.

Pour ce faire, il est nécessaire de prévoir, pour le perçage 7, un diamètre sensiblement supérieur à celui du noyau 6 de la vis afin d'éliminer tout contact, à ce niveau, entre les deux pièces.
Ce faisant, on comprend qu'il sera nécessaire de prévoir un centrage de la vis par rapport au couvre-culasse, puisque celui-ci ne pourra plus être assuré par le perçage 7, ainsi qu'un système d'étanchéité pour éviter l'écoulement de l'huile de lubrification par ledit perçage.
Pour cela, on interpose entre la face inférieure 12 de la tête de vis 10 et la surface 13 du fond de la cavité 11 un élément 14 capable de réaliser ces deux fonctions et dont la conception lui permet, en outre, de participer à l'isolation phonique de l'assemblage.
Cet élément est composé d'un manchon 15 en matériau plastique, tel que caoutchouc ou élastomère, serré sur le noyau 6 pour assurer l'étanchéité. Une gorge circulaire 16 est creusée radialement dans le manchon 15 et débouche sur sa surface externe 17. Une rondelle métallique 18 est engagée et serrée dans cette gorge 16 en saillie au-delà de la surface 17 du manchon. Une seconde rondelle 19, également métallique, est interposée entre la face inférieure 12 de la tête de vis 10 et la surface supérieure 20 du manchon, de laquelle elle est rendue solidaire, par exemple par adhérisation.
Le trou central 21 de la rondelle 19 a un diamètre tel qu'il n'existe qu'un jeu très faible entre sa périphérie et la surface externe du noyau 6 de la vis. De même, le jeu existant entre la périphérie externe 22 de la rondelle 18 et la paroi latérale 23 de la cavité 11 est également très faible. D'autre part, les positions réciproques des deux rondelles 18 et 19 sont bien déterminées grâce au fait qu'elles sont solidaires toutes les deux du manchon 15. De la sorte, ces rondelles coopérant en appui radial, l'une 18 avec la vis 5 et l'autre 19 avec le couvre-culasse 1, centrent de façon précise ces deux pièces, l'une par rapport à l'autre.
L'utilisation de deux rondelles séparées pour effectuer le centrage permet d'isoler phoniquement la vis 5 du couvre-culasse. En effet, on voit qu'aucune des deux rondelles métalliques n'est en contact à la fois avec les deux pièces : la rondelle 18 est isolée de la vis 5 par le manchon 15 dont le matériau joue également un rôle d'isolant phonique, tandis qu'un jeu suffisant est prévu entre la périphérie extérieure de la rondelle 19 et la paroi 23 de la cavité 11 pour éviter tout contact intempestif.

L'élément 14 peut avantageusement être obtenu par surmoulage, les deux rondelles métalliques 18 et 19 étant introduites dans le moule de formage du manchon 15, selon un procédé bien connu. Par ce procédé, on s'assure que les deux rondelles métalliques sont précisément coaxiales.

Bien entendu, l'utilisation d'un élément selon l'invention n'est pas limitée à l'application qui vient d'être décrite mais s'étend à tous les assemblages comportant un blocage par vissage pour lesquels on désire obtenir à l'aide d'un seul élément formant rondelle de contact, la triple fonction de centrage, d'étanchéité et d'isolation phonique.

De même, on vient de décrire une disposition dans laquelle un élément selon l'invention est interposé entre la tête d'une vis et la surface d'une des pièces à assembler. Un tel élément pourrait être interposé, de la même manière, entre un écrou, coopérant avec une vis et ladite surface.

## Revendications

1. Assemblage composé de deux pièces bloquées par vissage, d'une vis (5) et d'un élément formant rondelle de contact, interposé entre la face inférieure (12) de l'organe (10) de manoeuvre et/ou de serrage de la vis (5) et la surface (13) en regard de l'une (1) des deux pièces à assembler, ledit élément (14) comportant un manchon (15) en matériau plastique, serré sur la surface externe du noyau (6) de la vis (5) et pourvu d'une gorge circulaire (16) creusée radialement de façon à déboucher sur la surface externe périphérique (17) dudit manchon (15), dans laquelle est engagée et serrée une rondelle métallique (18), en saillie au-delà de la surface externe (17) du manchon,
caractérisé en ce que l'une (1) des deux pièces à assembler est munie d'une cavité (11) dont le fond (13) est pourvu d'un perçage (7), de diamètre sensiblement supérieur au noyau (6) de la vis (5) qui le traverse et qui est apte à recevoir l'organe (10) de manoeuvre et/ou de serrage de ladite vis ainsi que l'élément (14) formant rondelle de contact, de façon que la paroi latérale de la cavité (11) soit au contact, à un faible jeu près, de la périphérie extérieure (22) de la rondelle métallique (18) de l'élément (14), lequel comporte une seconde rondelle métallique (19) interposée entre la face inférieure (12) de l'organe de manoeuvre et/ou d'assemblage (10) et la surface supérieure (20) du manchon (15) de laquelle elle est rendue solidaire, la périphérie de son trou central (21) étant au contact, à un faible jeu près, de la surface externe du noyau (6) de la vis (5) précitée.

2. Elément selon la revendication 1,
caractérisé en ce que la seconde rondelle métallique (19) est rendue solidaire de la surface supérieure (20) du manchon par adhérisation.

3. Elément selon la revendication 1,
caractérisé en ce que les deux rondelles métalliques (18), (19) sont rendues solidaires du manchon (15) par surmoulage.

4. Elément selon l'une des revendications précédentes,
caractérisé en ce que l'organe (10) de manoeuvre et/ou d'assemblage de la vis (5) est la tête de ladite vis.

5. Elément selon l'une des revendications 1 à 3,
caractérisé en ce que l'organe (10) de manoeuvre et/ou d'assemblage de la vis (5) est un écrou coopérant avec ladite vis.

6. Elément selon l'une de revendications précédentes,
caractérisé en ce qu'il est interposé entre le couvre-culasse (1) et l'organe de manoeuvre et/ou de serrage (10) d'une vis (5) servant à fixer ledit couvre-culasse sur la culasse (2) d'un moteur à combustion interne de véhicule automobile.

## Patentansprüche

1. Anordnung gebildet aus zwei durch Schrauben blockierten Teilen, einer Schraube (5) und einem Element, das einen Kontaktring bildet, gesetzt zwischen der Unterseite (12) des Organs (10) zur Handhabung und/oder zum Klemmen der Schraube (5) und der Oberfläche (13) gegenüber einem (1) der beiden zusammenzubringenden Teile, wobei das Element (14) eine aus Kunststoffmaterial gebildete Muffe (15) aufweist, die auf der äußeren Oberfläche des Kerns (6) der Schraube (5) geklemmt ist und mit einer kreisförmigen Nut (16) versehen ist, die radial derart eingebracht ist, daß sie an der äußeren Umfangsfläche (17) der Muffe (15) mündet, in die ein Metallring (18) in Eingriff gebracht und geklemmt ist, der über die äußere Oberfläche (17) der Muffe hervorspringt,
dadurch gekennzeichnet, daß eines (1) der beiden zusammenzubringenden Teile mit einer Vertiefung (11) versehen ist, deren Boden (13) mit einer Öffnung (7) versehen ist, mit einem Durchmesser, der im wesentlichen größer ist als der Kern (6) der Schraube (5), der sie durchquert, und die in der Lage ist, das Organ (10) zur Handhabung und/oder zum Klemmen der genannten Schraube sowie das Element (14), das den Kontaktring bildet, aufzunehmen, derart, daß die seitliche Seitenwand der Vertiefung (11) in Kontakt, bis auf ein geringes Spiel, mit dem äußeren Umfang (22) des Metallrings (18) des Elements (14) steht, das einen zweiten metallischen Ring (19) aufweist, der zwischen der unteren Seite (12) des Organs zum Handhaben und/oder Zusammenzubringen (10) und der oberen Oberfläche (20) der Muffe (15) gesetzt ist, mit der er verbunden ist, wobei der Umfang seiner zentralen Öffnung (21) mit einem geringen Spiel in Berührung ist mit der äußeren Oberfläche des Kerns (6) der vorgenannten Schraube (5).

2. Element nach Anspruch 1, dadurch gekennzeichnet, daß der zweite metallische Ring (19) mit der oberen Oberfläche (20) der Muffe durch Ankleben verbunden ist.

3. Element nach Anspruch 1, dadurch gekennzeichnet, daß die beiden metallischen Ringe (18), (19) durch Anformen mit der Muffe (15) verbunden sind.

4. Element nach einem der vorhergehenden Ansprüche, dadurch gekennzeichnet, daß das Organ (10) zum Handhaben und/oder Zusammenbringen der Schraube (5) der Kopf dieser Schraube ist.

5. Element nach einem der Ansprüche 1 bis 3, dadurch gekennzeichnet, daß das Organ (10) zum Handhaben und/oder Zusammenbringen der Schraube (5) eine Mutter ist, die mit der Schraube zusammenwirkt.

6. Element nach einem der vorhergehenden Ansprüche, dadurch gekennzeichnet, daß es zwischen dem Verschlußdeckel (1) und dem Handhabungs- und/oder Klemmorgan (10) einer Schraube (5) gesetzt ist, die dazu dient, den Verschlußdeckel auf dem Zylinderkopf (2) eines Kraftfahrzeugverbrennungsmotors zu befestigen.

## Claims

1. An assembly composed of two parts locked by the screwing in of a screw (5) and an element forming a contact washer, interposed between the lower face (12) of the component (10) for handling and/or tightening the screw (5) and the surface (13) facing one (1) of the two parts to be assembled, said element (14) comprising a sleeve (15) made of plastic material, clamped to the outer surface of the core (6) of the screw (5) and provided with a circular groove (16) hollowed out radially so as to lead out to the outer peripheral surface (17) of said sleeve (15), in which there is engaged and clamped a metal washer (18), projecting beyond the outer surface (17) of the sleeve,
characterised in that one (1) of the two parts to be assembled is equipped with a cavity (11), the bottom (13) of which is provided with a bore hole (7), of diameter substantially greater than the core (6) of the screw (5) passing through it and which is suitable for receiving the component (10) for handling and/or tightening said screw as well as the element (14) forming a contact washer, such that the side wall of the cavity (11) is in contact, with a small amount of play, with the outer periphery (22) of the metal washer (18) of the element (14), which comprises a second metal washer (19) interposed between the lower face (12) of the handling and/or assembling component (10) and the upper surface (20) of the sleeve (15) with which it is made integral, the periphery of its central hole (21) being in contact, with a small amount of play, with the outer surface of the core (6) of the aforementioned screw (5).

2. An element according to Claim 1,
characterised in that the second metal washer (19) is made integral with the upper surface (20) of the sleeve by bonding.

3. An element according to Claim 1,
characterised in that both the metal washers (18), (19) are made integral with the sleeve (15) by duplicate moulding.

4. An element according to one of the preceding claims,
characterised in that the component (10) for handling and/or assembling the screw (5) is the head of said screw.

5. An element according to one of Claims 1 to 3,
characterised in that the component (10) for handling and/or assembling the screw (5) is a nut cooperating with said screw.

6. An element according to one of the preceding claims,
characterised in that it is interposed between the cylinder head cover (1) and the component for handling and/or tightening (10) a screw (5) serving to fasten said cylinder head cover to the cylinder head (2) of an internal combustion engine of a motor vehicle.
